# EUROPÄISCHE PATENTSCHRIFT

(11) **EP 0 248 429 B1**
(45) Veröffentlichungstag und Bekanntmachung des Hinweises auf die Patenterteilung: **24.03.1993**
(21) Anmeldenummer: 87108100.6
(22) Anmeldetag: 04.06.1987
(51) Int. Cl.: C02F 1/26

(54) **Verfahren zum Abtrennen von organischen Verbindungen aus Wasser durch Extraktion**
Method of extracting organic compounds from water
Procédé d'extraction de composés organiques de l'eau

(30) Priorität: 04.06.1986 DE 3618698
(43) Veröffentlichungstag der Anmeldung: 09.12.1987
(60) Teilanmeldung: 91108196.6
(73) Patentinhaber: PASSAVANT-WERKE AG, D-65322 Aarbergen 7 (DE)
(72) Erfinder: Belouschek, Peter, Dr. rer. nat., D-4300 Essen 18 (DE); Weiler, Walter, Dipl.-Ing., D-6252 Diez (DE)
(74) Vertreter: Glawe, Delfs, Moll & Partner

(56) Entgegenhaltungen:
- EP-A- 0 106 970
- DE-A- 2 004 314
- DE-A- 3 415 464
- FR-A- 2 251 525
- FR-A- 2 340 910
- US-A- 4 205 962
- US-A- 4 547 293

## Beschreibung

Die Erfindung betrifft ein Verfahren zum Abtrennen von organischen Verbindungen aus Wasser durch Extraktion von der im Oberbegriff des Anspruchs 1 angegebenen Art.

Ein Verfahren dieser Art ist aus DE-A-34 15 464 bekannt. Bei diesem bekannten Verfahren werden die Extraktion und die Abtrennung des Extraktionsmittels vom Wasser in zwei getrennten Stufen durchgeführt. Zuerst wird in Wasser fein dispergiertes Extraktionsmittel mit dem zu reinigenden Wasser in einem Extraktionsbehälter vermischt. Nach einer für die Extraktion ausreichenden Verweilzeit im Extraktionsbehälter wird das Wasser-Extraktionsmittel-Gemisch aus dem Extraktionsbehälter abgezogen und in einen gesonderten Filterbehälter geleitet, in welchem sich die als Adsorptionsfilter wirkende offenzellige Stützstruktur befindet. In diesem Filterbehälter trennt sich das Extraktionsmittel vom Wasser, wobei sich allmählich eine schwimmende Extraktionsmittelschicht bildet, die mit zunehmender Dicke auch bis in die Stützstruktur hineinreicht.

Dieses zweistufige Verfahren hat verschiedene Nachteile. Einerseits bedeutet die Notwendigkeit, getrennte Behälter für Extraktion und Abtrennung sowie Einrichtungen zum Vordispergieren, Dosieren und Zumischen des Extraktionsmittels zum Wasser vorzusehen, einen erheblichen apparativen und betrieblichen Aufwand. Andererseits kann dieses Verfahren nur dann optimal arbeiten, wenn die Menge des jeweils in den Extraktionsbehälter zudosierten Extraktionsmittels auf die Menge und den Verschmutzungsgrad des zuströmenden Wassers abgestimmt ist. Auch die Art der zu extrahierenden organischen Verbindungen und die Temperatur des zuströmenden Wassers spielen eine wichtige Rolle. Es ist aber sehr schwierig und aufwendig, die Menge und den Verschmutzungsgrad des Wassers laufend zu überwachen und die Zudosierung des Extraktionsmittels entsprechend zu steuern. Geschieht dies aber nicht, so wird das Wasser ungenügend gereinigt und/oder unnötig viel Extraktionsmittel verbraucht.

Ähnliche Nachteile gelten für Extraktionsverfahren, wie sie in DE-A-29 01 261, EP-B-0 013 659 und AT-A-2169/82 beschrieben sind.

Der Erfindung liegt die Aufgabe zugrunde, ein Verfahren der genannten Art so auszubilden, daß bei einfacher Verfahrensdurchführung eine besonders effektive Wechselwirkung des zu reinigenden Wassers mit dem Extraktionsmittel und damit ein besonders hoher Wirkungsgrad der Extraktion erzielt wird.

Die erfindungsgemäße Lösung der Aufgabe ist im Anspruch 1 angegeben. Die Unteransprüche beziehen sich auf weitere vorteilhafte Ausgestaltungen. Die erfindungsgemäße Lösung beruht auf dem Prinzip, dem Wasser durch eine Stützstruktur mit großer innerer Oberfläche einen in viele feine Strömungskanäle aufgeteilten Strömungsweg aufzuzwingen und es in diesen Strömungskanälen in innigen Kontakt mit dem Extraktionsmittel zu bringen, welches an der inneren Oberfläche und/oder in den Poren der Stützstruktur angelagert ist. Die Stützstruktur hat dabei eine dreifache Funktion. Sie dispergiert erstens das zu reinigende Abwasser in hohem Maße, so daß lange Kontaktzeiten mit dem Extraktionsmittel zustandekommen und eine ausreichende Extraktion auch bei an sich ungünstigen Verteilungskoeffizienten erzielt wird. Zweitens stellt die Stützstruktur das Extraktionsmittel in der gewünschten großen Kontaktfläche zur Verfügung. Drittens wirkt der in Strömungsrichtung vordere Teil der Stützstruktur auf die mitgeschwemmten Tröpfchen des Extraktionsmittels wie ein Adsorptions- und/oder Koaleszenzfilter, so daß das abgezogene gereinigte Wasser weitgehend frei von Extraktionsmittelresten ist. Da das Extraktionsmittel in der Stützstruktur angelagert ist, bedarf es weder einer laufenden gesteuerten Zudosierung des Extraktionsmittels, noch kann ein Extraktionsmittelüberschuß ungenutzt verbraucht werden.

Ein spezielles Verfahren muß angewendet werden, wenn die organischen Verbindungen im gasförmigen Zustand vorliegen, z.B. aus Geräten für die chemische Reinigung. Diese Reinigungsmittelgase und -dämpfe werden üblicherweise einer Gaswäsche unterworfen; es bereitet aber erhebliche Schwierigkeiten, diese meist halogenorganischen Verbindungen aus dem Abwasser zu eliminieren. Es wird deshalb meist im geschlossenen Kreislauf gearbeitet. Eine Lösung des Problems ist durch das vorliegende Extraktionsverfahren gegeben, indem die gasförmigen Verbindungen durch Strippen in Wasser gelöst werden und das Wasser der Extraktion in der Stützstruktur unterzogen wird. Es ist auch denkbar, den Strippvorgang gleichzeitig mit der Extraktion vorzunehmen, das Wasser also gleichzeitig mit dem Gas in die Stützstruktur einzuleiten. Eine besonders vorteilhafte Verfahrensführung ist jedoch dadurch gegeben, daß man die Gase unmittelbar durch die nur mit Extraktionsmittel geflutete Stützstruktur leitet und Sie dadurch eliminiert.

Das erfindungsgemäße Verfahren wird im folgenden anhand einiger Ausführungsformen unter Bezugnahme auf die Zeichnungen erläutert. Es zeigt:
- Fig. 1: die schematische Darstellung einer Anlage zur Durchführung des erfindungsgemäßen Verfahrens;
- Fig. 2-5: schematische Vertikalschnitte durch einen Teilbereich des Extraktionsbeckens von Fig. 1 bei verschiedenen Verfahrensvarianten.

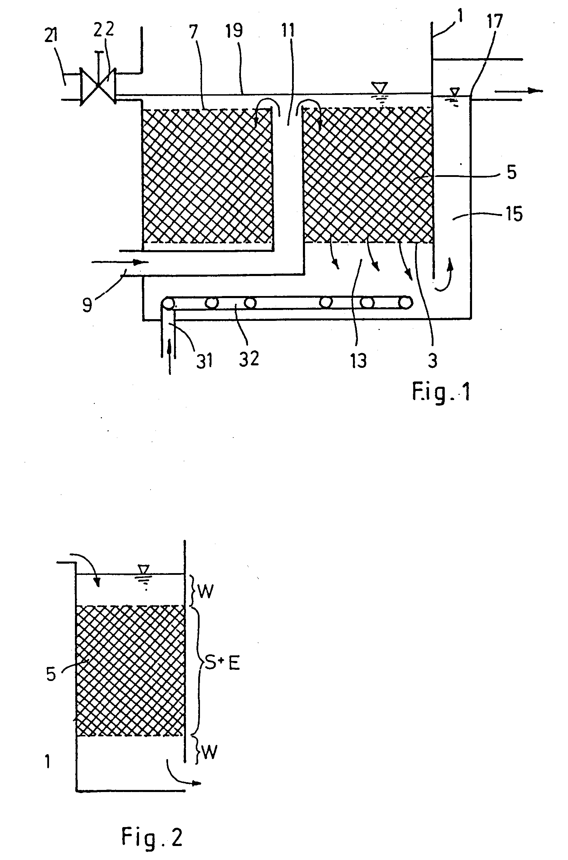

In Fig. 1 ist mit 1 ein Becken oder Gefäß bezeichnet, welches auf einem perforierten Stützboden 3 eine Füllung 5 aus einem Material trägt, welches eine poröse oder gitterförmige Stützstruktur mit zahlreichen Zwischenräumen und Strömungskanälen bildet. Hierfür in Frage kommende Materialien werden weiter unten noch näher erläutert. Die Stützstruktur kann oben durch einen weiteren perforierten Boden 7 abgedeckt sein, insbesondere, wenn sie aus einer losen Schüttung porösen Granulats oder dgl. besteht. Das zu reinigende Wasser wird durch die Leitung 9 zugeführt und gelangt über ein Steigrohr 11 an die Oberseite der Stützstruktur 5 und durchströmt diese von oben nach unten. Das gereinigte Wasser wird aus dem Raum 13 unterhalb des Bodens 3 über ein Steigrohr 15 und eine Überlaufkante 17 abgezogen. Die Höhe der Überlaufkante 17 und der Strömungswiderstand der Stützstruktur 5 bestimmen die Höhe des sich im Becken 1 einstellenden Flüssigkeitsspiegels 19.

Die Stützstruktur 5 kann auf verschiedene, im folgenden noch erläuterte Arten mit dem Extraktionsmittel beschichtet oder beladen sein. Bei der Strömung des zu reinigenden Wasser durch die zahlreichen feinen Strömungskanäle der Stützstruktur 5 gelangen die abzutrennenden organischen Verbindungen, insbesondere halogenierte Kohlenwasserstoffe, in innigen Kontakt mit dem Extraktionsmittel und werden aus dem Wasser abgetrennt.

Wenn nach einiger Zeit das Extraktionsmittel erschöpft, d.h. mit den abgetrennten organischen Verbindungen weitgehend gesättigt und demnach ineffektiv geworden ist, kann das Extraktionsmittel durch einen Rückspülvorgang von der Stützstruktur 5 getrennt und über die Leitung 21 mit Absperrorgan 22 abgezogen werden. Die Abtrennung der organischen Verbindungen kann in an sich bekannter Weise mittels Wasserdampfdestillation erfolgen. Das regenerierte Extraktionsmittel kann mittels einer Pumpe dem Extraktionsbecken 1 wieder zugeführt werden, um sich wieder an die Stützstruktur anzulagern. Für den Rückspülvorgang kann Spülflüssigkeit und/oder Spülluft oder aber das Extraktionsmittel selbst über eine oder mehrere Leitungen 31 und ein Verteilersystem 32 unterhalb der Stützstruktur 5 zugeführt werden.

Als Material für die Stützstruktur 5 kommt entweder eine Schüttung aus einem körnigen bzw. teilchenförmigen Material, wie z.B. Raschigringe oder dgl. aus Glas oder Kunststoff, Teilchen aus geschäumtem Perlit oder Blähton und dgl., oder auch eine ein- oder mehrteilige Füllung aus einem raumgitterförmigen Material, insbesondere einem retikulierten geschäumten Kunststoff, wie Polyurethan, in Frage. Auch eine Füllung aus Mineralfasern in Form eines Wirrfaservlieses ist denkbar.

Ganz besonders vorteilhaft ist es, wenn das die Stützstruktur bildende Material aus einem Werkstoff besteht oder mit einem solchen beschichtet ist, der für das verwendete Extraktionsmittel eine koaleszierende und/oder adsorbierende Wirkung hat. Der nicht belegte oder geflutete Teil der Stützstruktur hat dann für das verwendete Extraktionsmittel die Eigenschaft eines Filters, welches vom zu reinigenden Wasser etwa mitgerissene Teilchen oder Tröpfchen des Extraktionsmittels zurückhalten kann. Wenn das die Stützstruktur bildende Material selbst nicht die gewünschte Oberflächeneigenschaft aufweist, kann es mit einem entsprechenden Material, insbesondere einem geeigneten Kunstharz, aber auch mit Aktivkohle, Metall oder dgl., beschichtet sein. Als Beschichtungsverfahren kommen Aufdampfen, Elektrolyse, Sinterkleben oder dgl. in Frage.

Das für die Extraktion verwendete Extraktionsmittel ist nicht bleibender Bestandteil der Stützstruktur 5, sondern wird mit dieser temporärin Verbindung gebracht. Das Extraktionsmittel selbst ist allgemein eine lipophile Flüssigkeitsphase, wobei insbesondere für die Abwasserreinigung nur solche Extraktionsmittel in Frage kommen, die sich aus dem Wasser durch Schwerkrafttrennung mindestens mit einem Abscheidegrad abscheiden lassen, der den Bestimmungen über Direkt- und Indirekteinleitung von Abwässern genügt. Eine aromatenfreie flüssige Paraffinfraktion, wie aus dem Stand der Technik bekannt, ist auch bei dem erfindungsgemäßen Verfahren vorzugsweise als Extraktionsmittel geeignet. Es kommen jedoch auch andere Extraktionsmittel wie Öle und Wachse in Frage, wobei z.B. sogar bestimmte Altöle in besonders kostengünstiger Weise als Extraktionsmittel verwendet werden können.

Bei einer ersten Ausführungsform des erfindungsgemäßen Verfahrens wird die gesamte innere Oberfläche der Stützstruktur 5 mit einem durch Adhäsion anhaftenden Belag des flüssigen Extraktionsmittels versehen. Dies geschieht in der Weise, daß bei entleertem Extraktionsgefäß 1 das flüssige Extraktionsmittel so lange durch das Gefäß und die Stützstruktur 5 geleitet wird, bis sich eine ausreichende Menge des Extraktionsmittels an die Stützstruktur 5 angelagert hat. Das überschüssige flüssige Extraktionsmittel wird abgezogen, und anschließend kann die Zuführung des zu reinigenden Wassers über die Leitung 9 und der Extraktionsbetrieb beginnen. Bei dieser Betriebsweise des erfindungsgemäßen Verfahrens stellt sich der in Fig. 2 schematisch dargestellte Vertikalschnitt im Gefäß 1 ein, bei dem oberhalb und unterhalb der von der Stützstruktur 5 eingenommenen Schicht S + E sich extraktionsmittelfreie Wasserschichten W befinden. Falls von der Wasserströmung Extraktionsmittelteilchen oder -tröpfchen aus der Füllung nach unten mitgerissen werden, können sie in dem wassergefüllten, strömungsberuhigten Raum unterhalb der Stützstruktur 5 sich vom Wasser abtrennen und wieder nach oben aufsteigen, wo sie sich wieder an die Stützstruktur 5 anlagern.

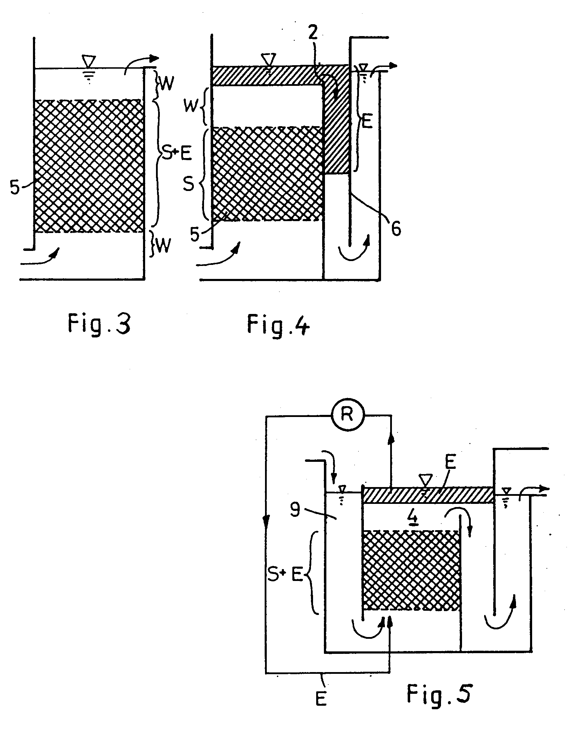

Bei den anhand von Fig. 1 und 2 erläuterten Ausführungsbeispielen wird die Stützstruktur vorteilhafterweise von oben nach unten durchströmt. Es ist jedoch auch die umgekehrte Anordnung mit Wasserströmung von unten nach oben möglich. Fig. 3 veranschaulicht schematisch die zu Fig. 2 analoge Anordnung, wobei die mit Extraktionsmittel getränkte bzw. beladene Stützstruktur 5 von unten nach oben durchströmt wird, so daß das gereinigte Wasser oberhalb der Stützstruktur 5 abgezogen werden kann. Dies bedingt bei der in Fig. 1 dargestellten Anordnung eine entsprechende Vertauschung von Zu- und Ablauf, was für den Fachmann in einfacher Weise möglich ist. Wenn etwa mitgerissene Extraktionsmitteltropfen zurückgehalten werden sollen, muß der Abzug tiefer hinter einer die Schwimmschicht zurückhaltenden Tauchwand erfolgen.

Bei der Ausführungsform nach Fig. 4 durchströmt das zu reinigende Wasser ebenfalls von unten nach oben zunächst eine beladene Stützstruktur 5 und findet dann jenseits der Überströmkante 2 eine schwimmende kompakte Extraktionsmittelschicht E vor, die es von oben nach unten durchströmen muß, bevor es hinter der Tauchwand 6 abgezogen werden kann.

Die Ausführungsform nach Fig. 5 arbeitet mit einer ständig neu belegten Stützstruktur 5. Dem bei 9 zulaufenden Abwasser wird unterhalb der Stützstruktur 5 Extraktionsmittel E zugemischt. Das Gemisch steigt von unten in die Stützstruktur 5 und belegt diese mit Extraktionsmittel. Abgeschältes und ggf. erschöpftes Extraktionsmittel treibt auf und sammelt sich in der Schwimmscicht E, während das gereinigte Wasser seitlich unter der Schwimmshicht abgeführt wird. Aus der Schwimmschicht E kann Extraktionsmittel kontinuierlich zur Regenerierung R entnommen und im Kreislauf zurückgeführt werden.

Es ist auch der Fall denkbar, daß die Dichte des Extraktionsmittels nur wenig unter 1 und die Dichte der zu extrahierenden Verbindungen erheblich über 1 ist. Dann kann die Dichte des beladenen Extraktionsmittels auf über 1 steigen, so daß eine vorher vorhandene Schwimmschicht zu Boden sinkt und die Durchströmfolge sich dann umkehrt. Apparativ ist diesem Wechsel durch die in Fig. 4 gezeigte Flüssigkeitsführung und -haltung Rechnung getragen.

Um das Extraktionsmittel zu regenerieren, muß das an der inneren Oberfläche der Stützstruktur 5 angelagerte Extraktionsmittel durch einen Rückspülvorgang entfernt werden, was durch Zuleitung eines Rückspülmediums wie Wasser und/oder Luft über die Leitung 31 und den Verteiler 32 von Fig. 1 geschieht. Vorzugsweise wird Heißwasser verwendet, dem zusätzlich waschaktive Substanzen oder organische Lösungsmittel beigefügt werden können. Auch Zuführung von Heißdampf ist möglich. Zusammen mit dem Rückspülmedium Luft kann auch gleich regeneriertes Extraktionsmittel zugeführt werden, so daß die Stützstruktur sogleich wieder belegt wird.

Eine anderen Methode zur Erneuerung des Extraktionsmittels sieht vor, zusätzlich zu der von unten eingeperlten Luft von oben Wasser aufzugeben und gleichzeitig unten eine die Wasserzufuhr übersteigende Menge Wasser abzuziehen. Dadurch wird die Stützstruktur schichtweise von oben nach unten rückgespült. Der aus erschöpftem Extraktionsmittel und Wasser bestehende Rückspülschlamm wird in einem separaten Behälter einem Trennvorgang unterworfen und das dekantierte Wasser nochmals durch die Extraktionsstufe geleitet.

In besonders gelagerten Fällen können mehrere Stufen hintereinandergeschaltet werden, die nacheinander durchströmt werden. Dabei kann die Porengröße der Stützstrukturen in Durchströmrichtung abnehmen. Es kann in den Stufen mit unterschiedlichen Extraktionsmitteln gearbeitet werden, um die Extraktion an die zu entfernenden Verbindungen anpassen zu können. Die Regenerierung der Stützstrukturen erfolgt vorteilhafterweise zu verschiedenen Zeiten.

Handelt es sich bei den Halogenorganen um leichtflüchtige Verbindungen, dann muß das ganze System gasdicht gekapselt werden. Die Gase oder Dämpfe werden aufgefangen und einer Strippung unterzogen, wie weiter vorne beschrieben.

## Patentansprüche

1. Verfahren zum Abtrennen von organischen Verbindungen, insbesondere halogenierten Kohlenwasserstoffen, aus Wasser durch Extraktion mittels eines mit Wasser nicht mischbaren, lipophilen Extraktionsmittels, insbesondere Paraffin, Wachs und/oder Öl,
wobei das die organischen Verbindungen enthaltende Wasser mit dem Extraktionsmittel in innigen Kontakt gebracht wird und das Wasser durch eine in einem Behälter angeordnete, nicht aus dem Extraktionsmittel bestehende offenzellige Stützstruktur mit großer innerer Kontaktoberfläche, die zahlreiche feine Strömungswege bildet, geleitet wird, dadurch **gekennzeichnet,**
daß das zu reinigende Wasser in die offenzellige Stützstruktur (5) eingeleitet wird und dadurch mit dem Extraktionsmittel, welches an die Kontaktoberfläche der Stützstruktur angelagert ist, in Kontakt gebracht wird und die Extraktion beim Durchströmen der Stützstruktur durchgeführt wird.

2. Verfahren nach Anspruch 1, dadurch **gekennzeichnet,** daß die Stützstruktur aus einer Schüttung eines körnigen Materials oder von Füllkörpern besteht.

3. Verfahren nach Anspruch 1, dadurch **gekennzeichnet,** daß die Stützstruktur aus einem offenzellig geschäumten Material besteht.

4. Verfahren nach Anspruch 1, dadurch **gekennzeichnet,** daß das Extraktionsmittel an der inneren Oberfläche der Stützstruktur dadurch angelagert wird, daß die Stützstruktur zeitweise mit dem flüssigen Extraktionsmittel geflutet und das überschüssige Extraktionsmittel abgezogen wird.

5. Verfahren nach Anspruch 1, dadurch **gekennzeichnet,** daß das Wasser nach dem Durchströmen der Stützstruktur einen extraktionsmittelfreien Raum durchströmt, in welchem sich mitgerissene Extraktionsmittelteilchen durch Schwerkraft vom Wasser abtrennen.

6. Verfahren nach einem der Ansprüche 1 bis 5, dadurch **gekennzeichnet,** daß die Stützstruktur aus einem Werkstoff besteht oder mit einem Werkstoff beschichtet ist, der aufgrund seiner Oberflächeneigenschaften adsorbierend und/oder koaleszierend bezüglich des Extraktionsmittels wirkt.

7. Verfahren nach einem der Ansprüche 1 bis 6, dadurch **gekennzeichnet,** daß dem Wasser vor seiner Einleitung in das Festbett ein lösliches, sorptionsbegünstigendes Mittel, insbesondere ein längerkettiger Alkohol und/oder ein nichtionogenes Tensid zugeführt wird.

8. Verfahren nach einem der Ansprüche 1 bis 7, dadurch **gekennzeichnet,** daß das Extraktionsmittel von Zeit zu Zeit durch Rückspülen von der Stützstruktur entfernt und regeneriert wird.

9. Verfahren nach Anspruch 8, dadurch **gekennzeichnet,** daß bei von oben nach unten durchströmter Stützstruktur das Extraktionsmittel dadurch entfernt wird, daß zunächst Luft bei gleichbleibendem Wasserstand unten eingeperlt und dann bei fortgesetzter Luftzufuhr der Wasserstand bis unter die Stützstruktur abgesenkt wird.

10. Verfahren nach Anspruch 8, dadurch **gekennzeichnet,** daß das beladene Extraktionsmittel durch zyklisches Absenken und Anheben des Wasserspiegels von der Stützstruktur entfernt wird.

11. Verfahren nach einem oder mehreren der vorstehenden Ansprüche, dadurch **gekennzeichnet,** daß das erschöpfte Extraktionsmittel permanent erneuert wird, indem es im Gleichstrom mit dem zu reinigenden Abwasser durch die Stützstruktur geleitet und oben abgezogen wird.

12. Verfahren nach einem oder mehreren der vorstehenden Ansprüche, bei dem die organischen Verbindungen im gasförmigen Zustand anfallen, dadurch **gekennzeichnet,** daß die gasförmigen Verbindungen durch Strippen in Wasser gelöst werden und dann das Wasser der Extraktion in der Stützstruktur unterzogen wird.

13. Verfahren nach einem oder mehreren der Ansprüche 1 bis 11, bei dem die organischen Verbindungen im gasförmigen Zustand anfallen, dadurch **gekennzeichnet,** daß die Gase zusammen mit sie strippendem Wasser durch die Stützstruktur geleitet werden.

14. Verfahren nach einem oder mehreren der Ansprüche 1 bis 13, bei dem die organischen Verbindungen im gasförmigen Zustand anfallen, dadurch **gekennzeichnet,**
daß man die Gase durch die nur mit Extraktionsmittel gefüllte Stützstruktur leitet.

## Claims

1. A method for separating organic compounds, especially halogenated hydrocarbons, from water by way of extraction through a lipophil extraction agent that cannot be mixed with water, especially paraffin, wax and/or oil, wherein the water containing the organic compounds is brought into intimate contact with the extraction agent and the water is conducted through an open-cell support structure, which is disposed in the container and does not consist of the extraction agent, having a large inner contact surface forming numerous fine flow channels, **characterized in that** the water to be cleaned is fed into the open-cell support structure (5) and thereby brought into contact with the extraction agent which is deposited on the contact surface of the support structure and that extraction is carried out during passage through the support structure.

2. A method as claimed in claim 1, **characterized in that** the support structure consists of a bed of a granular material or of a packed bed.

3. A method as claimed in claim 1 **characterized in that** the support structure consists of an open-cell foamed material.

4. A method as claimed in claim 1 **characterized in that** the extraction agent is deposited at the inner surface of the support structure by temporary flooding of the support structure with the liquid extraction agent and draining of the excessive extraction agent.

5. A method as claimed in claim 1 **characterized in that** after flowing through the support structure the water will flow through a space containing no extraction agent where entrained extraction agent particles are separated from the water by gravity.

6. A method as claimed in any of claims 1 to 5 **characterized in that** the support structure consists of a material or is coated with a material which due to its surface properties has an adsorbing and/or coalescing effect with regard to the extraction agent.

7. A method as claimed in any of claims 1 to 6 **characterized in that** a soluble sorption-conducive agent, especially a long-chain alcohol and/or a non-ionic surface-active agent is fed to the water before latter is being conducted to the packed bed.

8. A method as claimed in any of claims 1 to 7 **characterized in that** the extraction agent is removed from the support structure and regenerated from time to time by means of backwashing.

9. A method as claimed in claim 8 **characterized in that** in a support structure, which is passed in a downward direction from above, the extraction agent is removed in that at first air is bubbled in at a constant water level and that subsequently, at constant air supply conditions, the water level is lowered to a value below the support structure.

10. A method as claimed in claim 8 **characterized in that** the loaded extraction agent is removed from the support structure by cyclic lowering and lifting of the water level.

11. A method as claimed in one or several of the previous claims **characterized in that** the exhausted extraction agent is permanently renewed by conducting it through the support structure in the co-current with the water to be cleaned and draining it at the top.

12. A method as claimed in one or several of the previous claims, wherein the organic compounds exist in the gaseous state, **characterized in that** the gaseous compounds may be dissolved in water by stripping and that subsequently the water is subjected to extraction in the support structure.

13. A method as claimed in one or several of claims 1 to 11, wherein the organic compounds exist in the gaseous state, **characterized in that** the gases are conducted through the support structure together with the water that strips them.

14. A method as claimed in one or several of claims 1 to 13, wherein the organic compounds exist in the gaseous state, **characterized in that** the gases are conducted through the support structure which is only filled with extraction agent.

## Revendications

1. Procédé destiné à séparer des combinaisons organiques, notamment des hydrocarbures halogénés, de l'eau par extraction au moyen d'un agent d'extraction non-miscible à l'eau et lipophile, notamment de la paraffine, de la cire et/ou de l'huile, l'eau contenant les combinaisons organiques étant mise en contact intime avec l'agent d'extraction et où l'eau est guidée à travers une structure de support contenue dans un récipient, à pores ouvertes, non-formée par l'agent d'extraction et à surface de contact intérieure importante formant de nombreux canaux de courant, **caractérisé** par le fait que l'eau à épurer est introduite dans la structure de support 5 à pores ouvertes et par conséquent est mise en contact avec l'agent d'extraction déposé dans la surface de contact de la structure de support et que l'extraction se produit lors du passage de l'eau dans la structure de support.

2. Procédé selon revendication 1, **caractérisé** par le fait que la structure de support consiste en un versement d'un matériau granulé ou de corps de remplissage.

3. Procédé selon revendication 1, **caractérisé** par le fait que la structure de support consiste en un matériau moussé à pores ouvertes.

4. Procédé selon revendication 1, **caractérisé** par le fait que l'agent d'extraction est déposé sur la surface intérieure de la structure de support, que cette structure de support est inondée de temps à autre par de l'agent d'extraction liquide et que tout excédent d'agent extraction est soutiré.

5. Procédé selon revendication 1, **caractérisé** par le fait qu'après avoir traversé la structure de support, l'eau passe à travers un espace exempt d'agent d'extraction, dans lequel des particules d'agent d'extraction entraînées se séparent de l'eau par gravité.

6. Procédé selon l'une des revendications 1 à 5, **caractérisé** par le fait que la structure de support est constituée par un matériau ou est recouvert d'un matériau qui, en raison de ses caractéristiques de surface, a une action adsorbante et/ou coalescente sur l'agent d'extraction.

7. Procédé selon l'une des revendications 1 à 6, **caractérisé** par le fait que l'on ajoute à l'eau, avant son entrée dans le lit fixe, un agent soluble, favorisant la sorption, notamment un alcool à chaîne plus longue et/ou un agent de surface non-ionique.

8. Procédé selon l'une des revendications 1 à 7, **caractérisé** par le fait que de temps à autre l'agent d'extraction est enlevé de la structure de support par lavage à contre-courant et recyclé dans la suite.

9. Procédé selon revendication 8, **caractérisé** par le fait que pour un passage de la structure de support du haut vers le bas, l'agent d'extraction est éliminé grâce à l'introduction de bulles d'air par le bas, avec au début un niveau d'eau inchangé et où, avec l'introduction continuelle d'air, le niveau de l'eau est abaissé endessous de la structure de support.

10. Procédé selon revendication 8, **caractérisé** par le fait que l'agent d'extraction chargé est éloigné de la structure de support grâce à un abaissement et un soulèvement cycliques du niveau de l'eau.

11. Procédé selon une ou plusieurs des revendications susmentionnées, **caractérisé** par le fait que l'agent d'extraction épuisé est constamment rajeuni en le faisant traverser la structure de support en même temps que l'eau à épurer et en le soutirant par le haut.

12. Procédé selon une ou plusieurs des revendications mentionnées ci-dessus, dans lequel les combinaisons organiques se présentent sous forme gazeuse, **caractérisé** par le fait que les combinaisons gazeuses sont dissoutes dans l'eau par stripage et qu'ensuite l'eau est soumise à l'extraction dans la structure de support.

13. Procédé selon une ou plusieurs des revendications 1 à 11, dans lequel les combinaisons organiques se présentent sous forme gazeuse, **caractérisé** par le fait que les gaz sont menés à travers la structure de support em même temps que l'eau de stripage.

14. Procédé selon une ou plusieurs des revendications 1 à 13, dans lequel les combinaisons organiques se présentent sous forme gazeuse, **caractérisé** par le fait que les gaz sont menés à travers la structure de support qui n'est remplie que d'agent d'extraction.
